# FASCICULE DE BREVET EUROPEEN

(11) **EP 0 996 102 B1**
(45) Date de publication et mention de la délivrance du brevet: **02.08.2006**
(21) Numéro de dépôt: 99402556.7
(22) Date de dépôt: 18.10.1999
(51) Int. Cl.: G07F 7/10, G06K 7/00

(54) **Procédé de contrôle d'un terminal muni d'un connecteur de carte à micromodules à contacts**
Verfahren zum Kontrollieren eines Terminals versehen mit Kontakten für Karten mit Mikromodulen
Method for checking a terminal provided with a contact connector for cards with micromodules

(30) Priorité: 20.10.1998 FR 9813134
(43) Date de publication de la demande: 26.04.2000
(73) Titulaire: FRANCE TELECOM, 75015 Paris (FR)
(72) Inventeur: Mounier, Jean-Pierre, 14440 Douvres la Délivrande (FR); Michel, Philippe, 14000 Caen (FR)
(74) Mandataire: Poulin, Gérard

(56) Documents cités:
- FR-A- 2 554 262
- FR-A- 2 640 061
- FR-A- 2 659 770
- FR-A- 2 770 668
- US-A- 4 605 896

## Description

### DOMAINE TECHNIQUE

La présente invention concerne un procédé de contrôle d'un terminal muni d'un connecteur de carte à micromodules à contacts.

### ÉTAT DE LA TECHNIQUE ANTÉRIEURE

Dans le domaine des appareils qui utilisent des cartes à micromodules à contacts, on est amené à résoudre des problèmes provenant de contacts de plus ou moins bonne qualité qui engendrent des échanges électriques souvent défectueux et de lutter contre des fraudes qui découlent de l'interruption de certains contacts entre la carte et le connecteur de carte, ou de l'utilisation de micromodules permettant de simuler les cartes normalement utilisées.

Les terminaux peuvent être dotés d'un système permettant la détection d'« inserts » introduits dans le connecteur de carte dans le but de les relier à des systèmes de simulations extérieurs. De tels « détecteurs de connexion externe » permettent de rejeter ce type de fausses cartes. Cependant, la technique des fraudeurs a évolué et les fausses cartes actuelles ont souvent des supports au format classique d'une carte bancaire. Le point faible de ces cartes est alors le composant qui nécessite un oscillateur propre dont la consommation est supérieure à celle des cartes à mémoire non falsifiées.

Les dispositifs de l'art antérieur présentent les inconvénients suivants :
- Lorsque des échanges sont interrompus parce que le terminal détecte une substitution de carte, cette substitution peut être déclenchée quand le terminal relie une carte à mémoire dont le contenu est différent de celui qu'il avait mémorisé à l'introduction de la carte. Souvent ces « substitutions » ne correspondent pas à une vraie substitution, et sont dues à des échanges douteux entre la carte et le terminal.
- Lorsque des cartes à mémoire sont détruites parce que des écritures se produisent à des endroits inattendus, les lectures correspondantes sont erronées ou transformées en écritures.
- Lorsque des cartes sont refusées parce que la zone d'identification lue est incorrecte, il se peut que la lecture de cette zone soit erronée.
- De nombreuses fraudes se font par masquage des contacts ou retrait du module sans retrait de la carte. Lorsque l'on veut ensuite écrire dans la carte, le terminal ne peut plus assurer l'écriture, toutefois l'utilisateur a pu obtenir le service désiré.
- D'autres fraudes se font à l'aide de micromodules encartés qui utilisent des microprocesseurs pour simuler des cartes normalement utilisées par l'application (par exemple télévision à péage, terminaux téléphoniques). La miniaturisation des composants électroniques, en particulier des microcontrôleurs, permet la fabrication artisanale de cartes à mémoire se rapprochant du format ISO. Les dispositifs de l'art connu ne permettent pas la détection de telles fausses cartes de taille réduite.

L'analyse de ces différents cas montrent que, pour les trois premiers cas, il y a souvent mauvaise lecture de la carte. Cette mauvaise lecture est due à un (ou des) contact(s) mal établi(s) entre le micromodule et le lecteur de carte du terminal. De tels contacts peuvent sembler bons mais il est prouvé que des perturbations interviennent quand le contact a une résistance supérieure à environ 200 mΩ. Dans le quatrième cas, il y a coupure des contacts entre le micromodule et le lecteur de carte du terminal. Le cinquième cas demande une approche différente qui consiste à essayer de détecter la présence d'une horloge ou une consommation qui ne correspond pas au composant d'une carte à mémoire.

L'invention a pour objet un procédé de contrôle d'un terminal muni d'un connecteur de carte à micromodules à contact permettant de pallier les inconvénients de ces dispositifs de l'art antérieur.

Le brevet US 4 605 896 décrit un procédé pour réaliser une liaison avec les contacts d'une carte d'identification comportant un module circuit intégré, qui permette un très faible taux de rejet en respectant des conditions de fonctionnement définies. Cet objet est réalisé en nettoyant ces contacts avant et pendant la liaison au moyen d'éléments de nettoyage séparés ou d'éléments de contact spécifiques.

La demande de brevet FR 2 640 061 décrit un lecteur de cartes à mémoire électronique muni d'un dispositif de détection de cartes simulées. Ce lecteur comporte des circuits pour appliquer à la carte des combinaisons de signaux et des circuits pour détecter la réponse de la carte à ces signaux et comparer cette réponse à ce qu'elle devrait être dans le cas d'une vraie carte.

La demande de brevet FR 2 554 262 décrit un dispositif anti-fraude pour un lecteur de cartes à mémoire électronique qui permet de détecter toute tentative d'introduction d'une carte factice pour avoir accès aux signaux échangés entre le circuit de traitement du lecteur et le circuit intégré de la carte. Pour cela le passage d'introduction du lecteur de cartes est muni d'éléments de détection et de moyens de traitement des signaux délivrés par ces éléments de détection pour détecter la présence de fils conducteurs étrangers.

### EXPOSÉ DE L'INVENTION

La présente invention concerne un procédé de contrôle d'un terminal muni d'un connecteur de carte à micromodules à contact comprenant des balais à contact aptes, chacun, à porter sur un contact de la carte, caractérisé en ce que, au moins un balai comportant deux lames de contact aptes à porter sur le même contact de la carte, lors de l'introduction de la carte dans le connecteur, on vérifie qu'au moins une résistance de contact mesurée entre les deux lames de contact d'un balai est bien inférieure à une première valeur déterminée ; en ce que, en cours de communication entre la carte et le terminal on vérifie qu'au moins une résistance de contact mesurée entre les deux lames d'un balai est bien inférieure à une seconde valeur déterminée, et en ce que l'on vérifie que deux contacts de la carte, qui ne doivent jamais être reliés entre eux, ne sont pas en court-circuit.

Avantageusement, on mesure en outre la consommation du composant de la carte de manière à détecter la présence d'un microprocesseur en lieu et place de ladite carte.

Dans un premier mode de réalisation le terminal recherche immédiatement la présence d'un microcontrôleur par détection de fausses cartes puis examine la qualité des contacts avant de lire la zone d'identité pour amorcer le dialogue terminal/carte, puis dès que le terminal passe en phase de numérotation, il active la détection de fraude au masquage par mesure de résistance, le détecteur restant actif durant toute la communication.

Dans un second mode de réalisation le terminal examine la qualité des contacts, puis recherche la présence d'un microcontrôleur par détection de fausses cartes avant de lire la zone d'identité pour amorcer le dialogue terminal/carte, puis, dans une phase de numérotation, lance un cycle qui fait alterner la détection de fraude au masquage et la détection de connexion externe ou la détection de fausses cartes.

Avantageusement on utilise des balais à contact divisés, chacun, en deux lames de contact aptes à porter sur un contact unique de la carte. On mesure alors la résistance entre ces deux lames de contact. Pour effectuer la mesure des contacts, on peut également mettre en série tous les doubles contacts et mesurer la résistance ainsi obtenue.

La présente invention concerne écralement un terminal tel que defini par revendication 10.

Le procédé de l'invention permet de mesurer et surveiller la qualité de ces contacts pendant le temps où la carte est utilisée. Si la résistance de contact entre le connecteur et la carte est inférieure à par exemple 200 mΩ, le contact est bon, sinon il peut y avoir des lectures aléatoires ou une coupure du contact. Si les lectures sont aléatoires, on a une possibilité de refus de la carte en cours d'utilisation et si le contact est coupé, il y a dysfonctionnement de la carte ou fraude.

Dans le cas d'utilisation de micromodules permettant de simuler les cartes normalement utilisées, ce procédé tient compte du fait que les cartes à mémoire doivent toujours recevoir un signal d'horloge venant du terminal hôte. Avec l'apparition de nouveaux microcontrôleurs plus petits et plus rapides, il est possible de fabriquer artisanalement des fausses cartes à mémoire à base de microcontrôleurs. Ces cartes n'utilisent pas le signal d'horloge venant du terminal pour créer leur propre rythme. Le microcontrôleur de la carte falsifiée possède sa propre référence de temps, bâtie autour d'un quartz, d'un résonateur céramique ou d'un réseau constitué d'une résistance et d'une capacité. Le procédé de l'invention permet de détecter de telles cartes ayant leur propre référence de temps. De plus la consommation d'un microprocesseur au repos étant très supérieure à celle d'une carte à mémoire au repos, le procédé de l'invention permet de distinguer une fausse carte utilisant un microprocesseur d'une carte à mémoire, en mesurant le courant consommé. C'est une variante plus simple de détection de la présence de microcontrôleurs.

Accessoirement, le procédé de l'invention permet de déterminer quand il faut changer un connecteur soit à la suite de l'usure normale de ce composant, soit après un incident ou un acte de vandalisme.

### BRÈVE DESCRIPTION DES DESSINS

- la figure 1 illustre une mesure de résistance de contact selon le procédé de l'invention,
- la figure 2 illustre un connecteur de l'art connu,
- les figures 3 et 4 illustrent le connecteur de l'invention,
- les figures 5 et 6 illustrent deux scénarios de fonctionnement du procédé de l'invention, donnés à titre d'exemple,
- les figures 7A et 7B, et 8A, 8B et 8C représentent les organigrammes de fonctionnement correspondants respectivement aux scénarios illustrés sur les figures 5 et 6,
- la figure 9 illustre un exemple de réalisation détaillée de mesure de résistance de contact et de contrôle de bonne lecture,
- la figure 10 illustre un exemple de réalisation de la détection d'une résistance de contact supérieure à 3,2 ohms,
- la figure 11 illustre un exemple de réalisation détaillée de mesure de résistance de contact et de détection de fraudes,
- la figure 12 illustre un exemple de détecteur de fraudes simplifié,
- les figures 13A à 13D illustrent le principe de la détection anti-fraude au masquage,
- les figures 14A à 14C illustrent un exemple de réalisation détaillée de mesure de résistance de contact complète et de détection de fausses cartes,
- la figure 15 illustre un dispositif de contrôle de la consommation de la carte.

### EXPOSÉ DÉTAILLÉ DE MODES DE RÉALISATION PARTICULIERS

La présente invention concerne un procédé de contrôle d'un terminal muni d'un connecteur de carte à micromodules à contact.

Selon le procédé de l'invention, lors de l'introduction de la carte dans le connecteur on mesure les résistances de tous les contacts, ou au moins de certains contacts. Les lectures sont considérées comme fiables si les résistances de contact (Rc) sont inférieures ou égales à une certaine valeur, 200 mΩ par exemple. Sinon on signale au terminal qu'il y a potentiellement un fonctionnement défectueux. A titre d'exemple on pourrait ainsi avoir :
- Si Rc ≤ 200 mΩ, alors carte acceptée.
- SI 200 mΩ < Rc ≤ 5 Ω, alors carte douteuse.
- Si Rc > 5 Ω, alors carte refusée.

De plus, en cours de communication, on surveille au moins un contact. Si la résistance Rz de ce contact devient supérieure à une valeur donnée, par exemple 1 MΩ ou 2 MΩ ou 5 Ω suivant le montage utilisé, il est réputé interrompu et on peut soupçonner que les contacts sont masqués.

Des fraudeurs peuvent introduire une plaque conductrice pour tromper le système. Aussi, pour pallier une telle éventualité, dans le procédé de l'invention, on surveille deux contacts qui ne doivent jamais être en court-circuit. A l'introduction d'une plaque conductrice, la résistance Ri, mesurée entre ces contacts, devient nulle et indique une fraude.

Si Rz > 1 MΩ (par exemple), ou si Ri = 0, alors on a fraude par masquage.

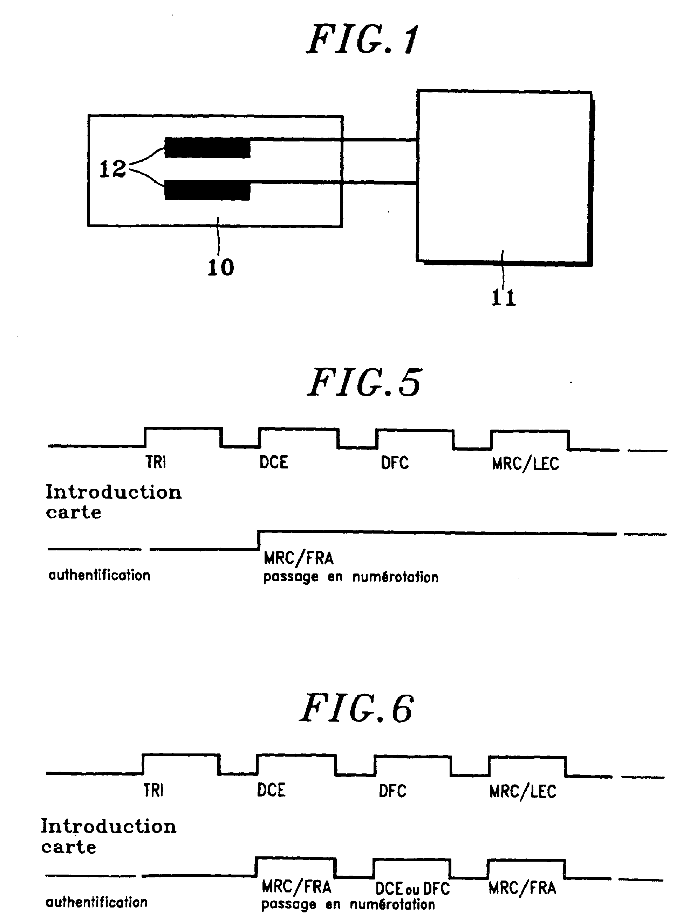

Comme illustré sur la figure 1, pour pouvoir mesurer la résistance de contact, le balais de contact du connecteur peut être divisé en deux lames de contact 12 qui portent sur un contact unique 10 de la carte. Un système 11 situé derrière ces deux balais mesure alors la résistance entre les deux lames. Ce système fournit une information simplement en « bon » si la résistance est inférieure à 200 mΩ par exemple, ou « mauvais » sinon. L'invention peut aussi fournir une information de type « bon » si il y a contact, « mauvais » sinon.

Des systèmes de commutation qui permettent d'assurer le passage de la phase mesure de résistance à la phase utilisation normale sont classiques.

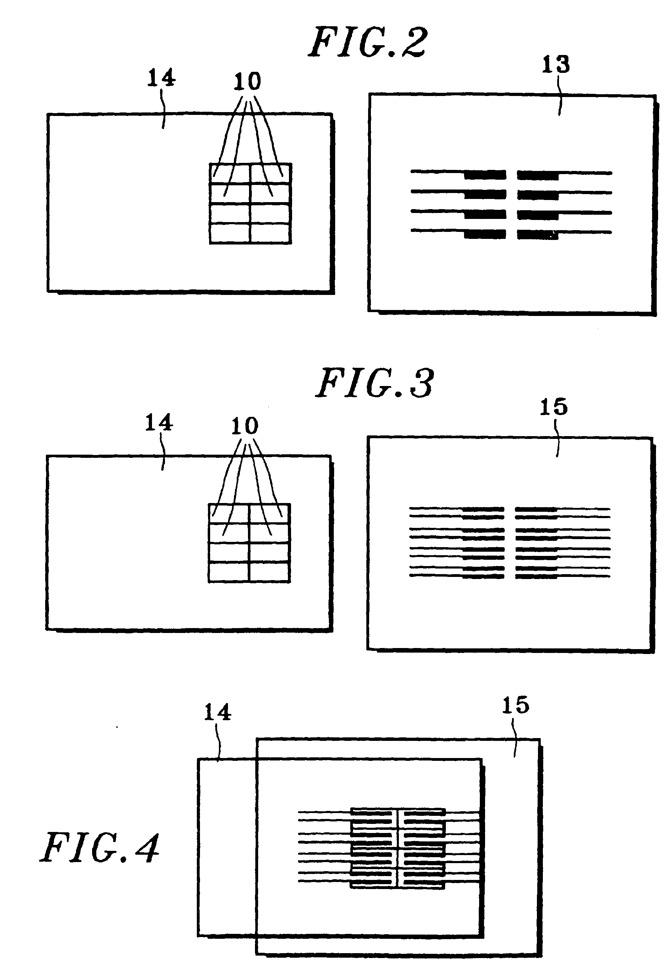

La figure 2 illustre un connecteur de l'art connu, avec une carte 14 munie de contacts 10. La figure 3 illustre le connecteur 15 de l'invention. La figure 4 illustre ce connecteur de l'invention, avec une carte introduite dans celui-ci.

Les microcontrôleurs utilisant la technologie CMOS, leur consommation est donc rythmée par l'horloge propre du microcontrôleur. Le procédé de l'invention permet, en outre, de détecter la présence d'un microprocesseur en lieu et place d'une carte à mémoire à l'aide de la simple mesure de la consommation du composant et donc du courant d'alimentation de la carte.

### Exemple de réalisation en publiphonie

On va à présent étudier un exemple de réalisation du procédé de l'invention, en publiphonie.

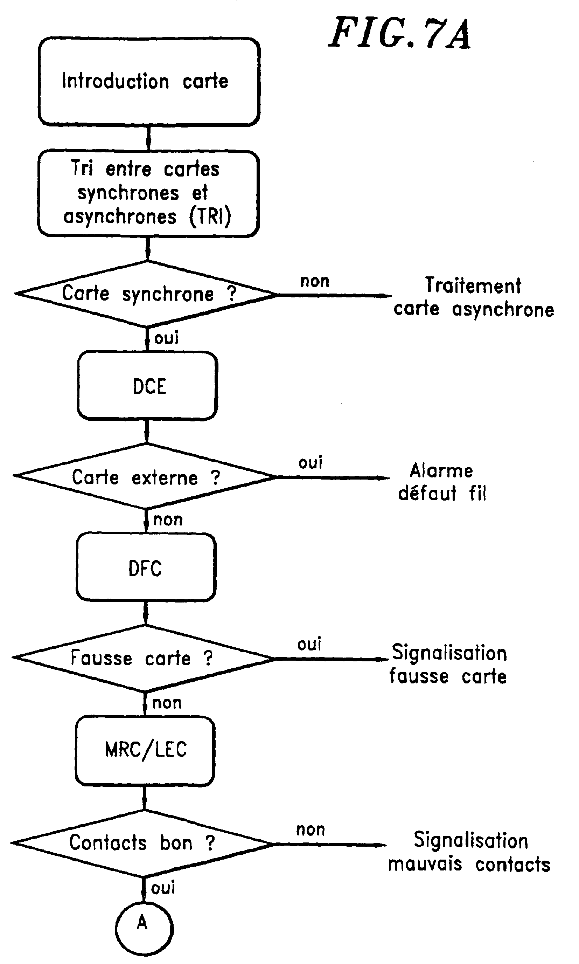

Un cycle complet de l'acceptation d'une carte, du contrôle de lecture correcte et de rejet des fraudes au masquage est donné ici, à titre d'exemple, sous forme de deux scénarios qui peuvent être modifiés :
- un premier scénario illustré sur la figure 5,
- un second scénario illustré sur la figure 6.

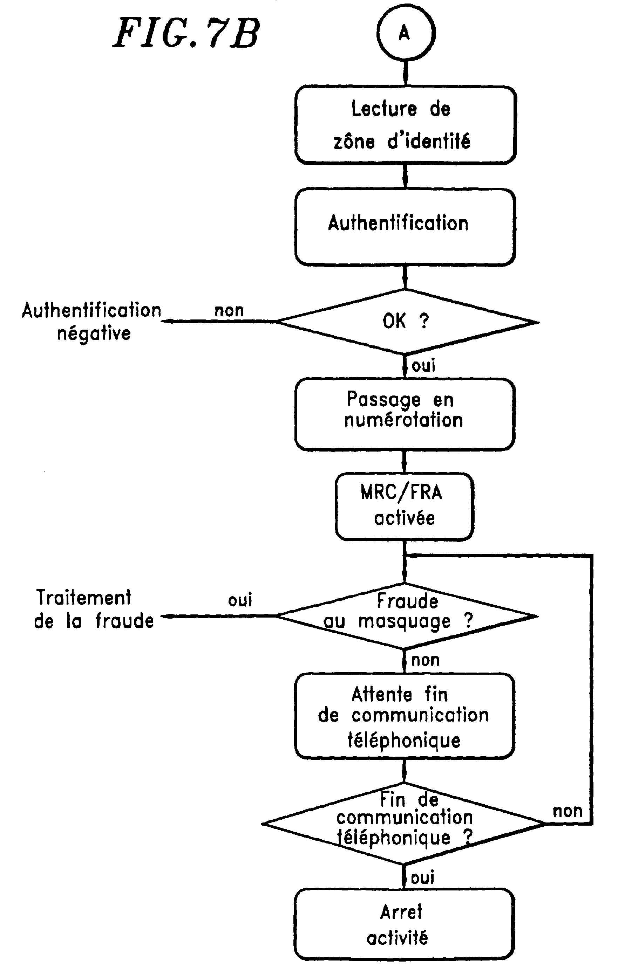

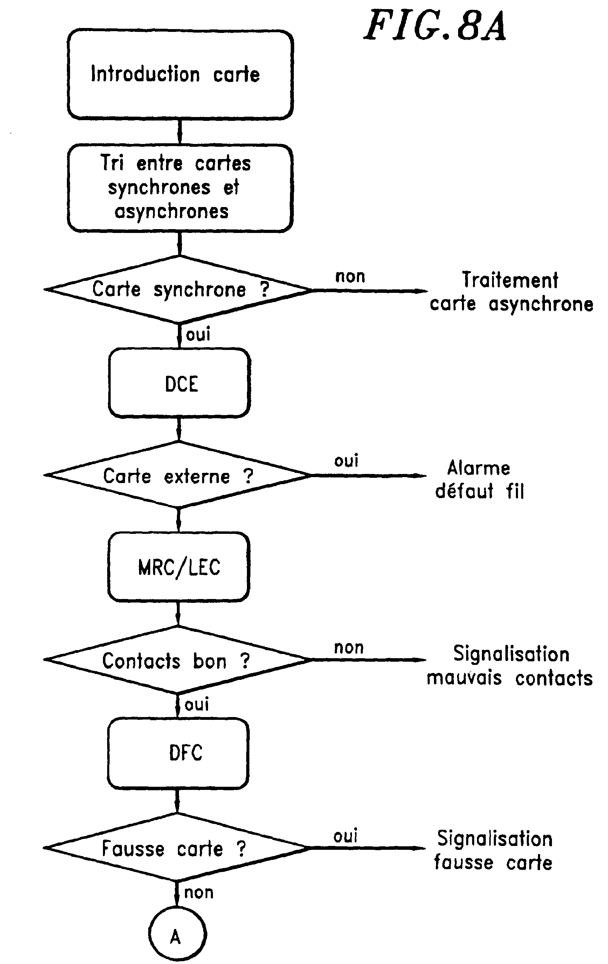

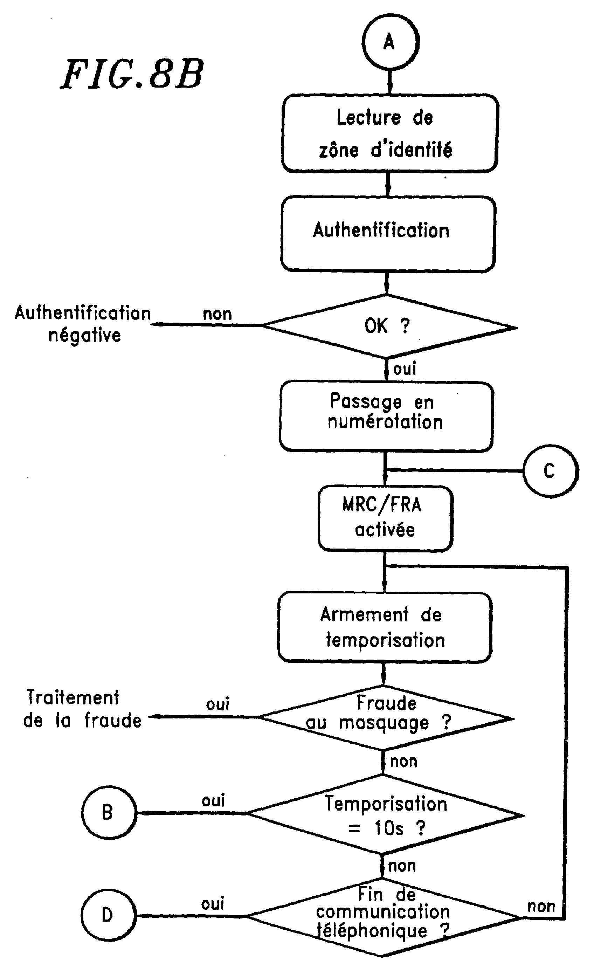

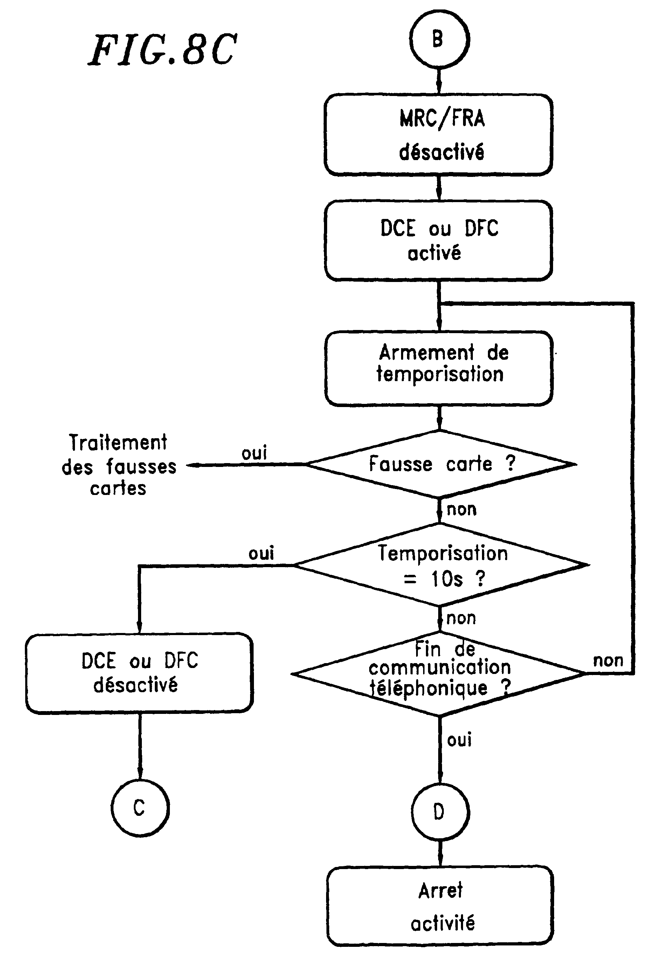

Les organigrammes correspondants décrivant le fonctionnement du procédé de l'invention sont donnés respectivement aux figures 7A et 7B ; et aux figures 8A, 8B et 8C.

Ces deux scénarios montrent deux exemples d'enchaînement des actions dès l'introduction d'une carte. Le tri entre carte synchrones et asynchrones (TRI) permet de connaître le type de la carte introduire. Les cartes à mémoires sont des cartes synchrones. Le détecteur de connexion externe (DCE), s'il est actif, détecte une éventuelle connexion externe.

Dans le premier scénario le terminal recherche immédiatement la présence d'un microcontrôleur par détection de fausses cartes (DFC) puis examine la qualité des contacts avant de lire la zone d'identité (ZI) pour amorcer le dialogue terminal/carte. Dès que le terminal passe en phase de numérotation il active la détection de fraude au masquage par mesure de résistance. Le détecteur reste actif durant toute la communication.

Le second scénario démarre comme le précédent mais la mesure de la qualité des contacts précède la détection de fausses cartes. Par contre la phase de numérotation lance un cycle qui fait alterner la détection de fraude au masquage et la détection de connexion externe ou la détection de fausses cartes. Il est possible de mixer aléatoirement tous ces types de détection. La fréquence d'alternance de ces dispositifs est fixée ici par une temporisation qui est, par exemple, réglée arbitrairement à 10 secondes.

### • Mesure de résistance des contacts

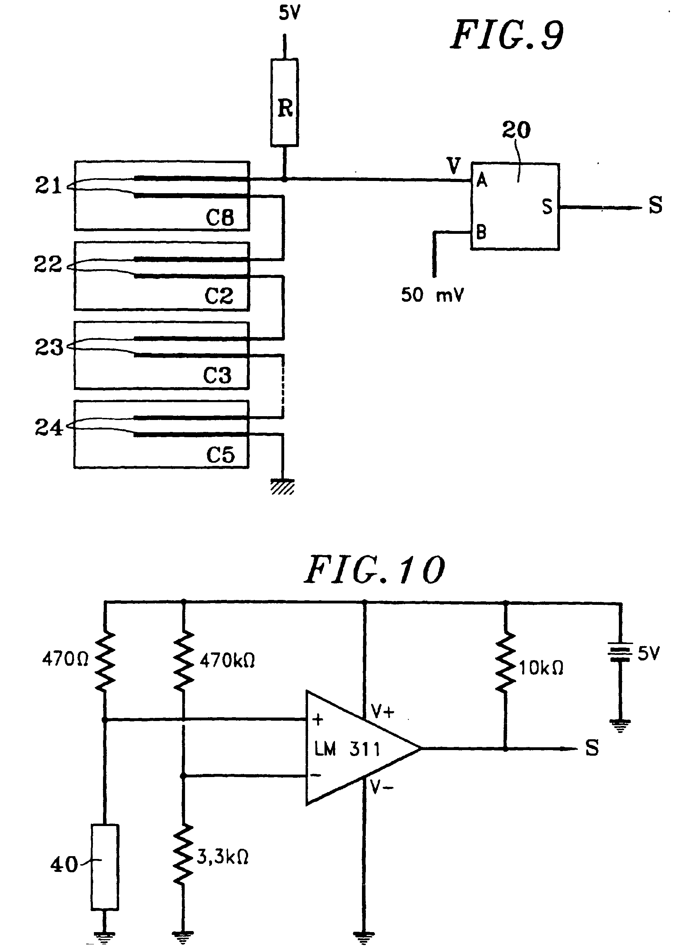

Un exemple de mesure de résistances de contact et de contrôle de bonne lecture (MRC/LEC) est illustré sur la figure 9. Sur cette figure des balais doubles reposent sur les contacts de carte et notamment les contacts n°8 (C8), n°2 (C2), n°3 (C3) et n°5 (C5). Le premier balai de la première paire 21 est relié à la tension +5V au travers d'une résistance R et à une première entrée A d'un comparateur de tension 20 dont la seconde entrée B est reliée à une tension de 50 mV. Le second balai de la première paire 21 est relié au premier balai de la seconde paire 22. Le second balai de la seconde paire 22 est relié au premier balai de la troisième paire 23. Le second balai de la troisième paire 23 est relié au premier balai de la quatrième paire 24. Le second balai de la quatrième paire 24 est relié à la masse.

Le comparateur 20 permet de mesurer la résistance totale Rtot. Cette résistance Rtot doit être égale à :
Rtot=R+Σ (R contact (200 mΩ par contact))
Σ (R contact) = 16x0,2Ω=3,2Ω
I=10 mA
Rtot=5/10⁻² = 500 Ω
500 Ω étant grand devant 3,2 Ω on règle le courant pour obtenir 32 mV avec un bon lecteur en A avec 490 Ω<R<500 Ω.
Si A≤ 50 mV => BON => S = 0
Si A > 50 mV =>MAUVAIS => S = 1 (les 50 mV sont arbitraires ici et seule un ensemble de mesures permet de trouver la bonne valeur à adopter suivant le type de lecteur).

Cette figure 9 donne donc un exemple de réalisation élémentaire de la mesure des contacts. On met en série tous les doubles contacts et on mesure la résistance ainsi obtenue. Chaque contact balais/plot doit faire moins de 200 mΩ en théorie. On fait ainsi passer un courant dans la résistance obtenue et on mesure la tension aux bornes de cette résistance. Pour plus de commodité, il est possible de ne mesurer que certains contacts représentatifs.

La figure 10 illustre un exemple de montage testé pour mesurer avec assez de précision des résistances faibles. La réalisation complète nécessitant des commutations qui introduisent des résistances parasites non calibrées et dont il faut tenir compte, le montage doit être étalonné avec des connecteurs réels sur un montage industriel ; ce qui ne présente aucune difficulté pour un homme de l'art.

Cette figure 10 illustre une réalisation d'un circuit de détection d'une résistance de contact de valeur supérieure à 3,2 ohms. La résistance de contact est représentée par la résistance 40, un courant de 10 mA la traverse créant une tension à ses bornes qui est comparée à une tension limite de 34 mV.

Si la résistance de contact est supérieure à environ 3,4 Ohms, la sortie S du comparateur bascule bien à 5 volts. L'état de cette sortie est facilement identifiable par un système logique.

Le calibrage des résistances permet de s'adapter à une résistance de contact qui dépend du nombre de contacts pris en compte (mesurés) et des résistances parasites du système de commutation.

### • Contrôle de la fraude au masquage

Dans un contrôle de la fraude au masquage, on vérifie que les contacts entre la carte et le lecteur ne sont pas coupés. Pour réaliser une telle coupure, le fraudeur peut introduire un bout de carton dans le lecteur. Les liaisons électriques carte/lecteur sont alors coupées et les balais doubles sont isolés. La détection de cette coupure entre balais donne l'indication de fraude. Un seul contact peut suffire.

Si les fraudeurs utilisent une surface métallique pour leurrer le procédé de l'invention, cette surface est détectée comme un court-circuit par le coupleur du terminal. Pour que cette réalisation soit totalement indépendante, le procédé de l'invention teste le court-circuit entre deux plots éloignés qui ne doivent jamais être reliés.

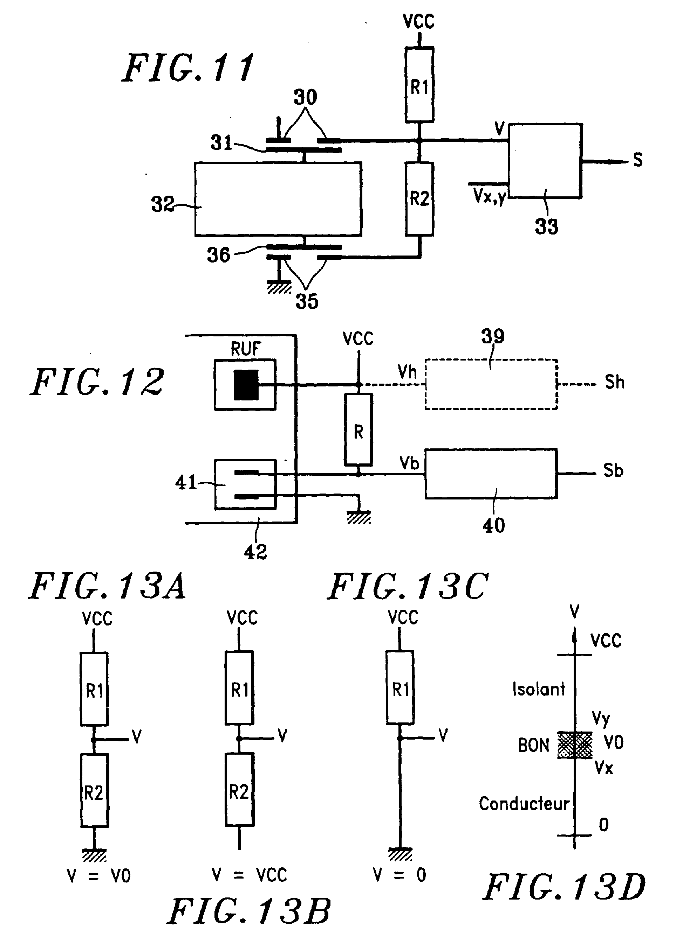

Un dispositif de mise en oeuvre d'une telle caractéristique ne présente aucune difficulté de réalisation, les états à tester étant franchement différents. La figure 11 illustre un tel dispositif et la figure 12 donne un exemple de réalisation très simple.

La figure 11 illustre un exemple de réalisation détaillée de mesure de résistance de contacts et de détection de fraudes (MRC/FRA). Un premier balai double 30 est disposé sur un premier contact 31 (C8, ou réservé pour utilisation future, ou contrôle de fusible) de la carte 32, le premier balai étant inutilisé, l'autre étant relié à une tension Vce au travers d'une résistance R1 et à une première entrée d'un comparateur de tension 33 dont la seconde entrée reçoit une tension Vx,y. Un second balai double 35 est disposé sur un second contact 36 (C5, ou masse) de la carte, le premier balai étant relié à la masse, l'autre étant relié à la première entrée du comparateur de tension 33 au travers d'une résistance R2. La coupure entre balais et contact carte détermine une fraude avec un isolant et le court-circuit de R2 indique une fraude avec une plaque conductrice.

La figure 13 explique le fonctionnement de cette détection. La figure 13A (V=V0) illustre le cas normal, la figure 13B (V=VCC) illustre le cas « isolant » et la figure 13C (V=0) illustre le cas « conducteur ».

Le courant i dans la résistance R2 dépend de l'état des contacts des doubles balais des plots C5 et C8. Dans le cas où il n'y a pas de fraude (cas normal) les balais sont reliés aux contacts de la carte et R2 n'est pas court-circuitée. Alors par exemple i=V/11 ; R2 valant 10 fois R1 (Il suffit que R2 soit grande devant R1). Dans le cas où il y a fraude avec un isolant (cas coupure) la masse, en particulier, est coupée. Il n'y a plus de courant dans le pont de résistance et i=0. Si la fraude est faite à l'aide d'un conducteur (cas court-circuit) la résistance R2 est court-circuitée. Par exemple le courant i=V/1 ; la résistance R1 étant faible devant R2.

Il est donc possible de déterminer une plage de courant où le fonctionnement est normal, comme illustré sur la figure 13D.

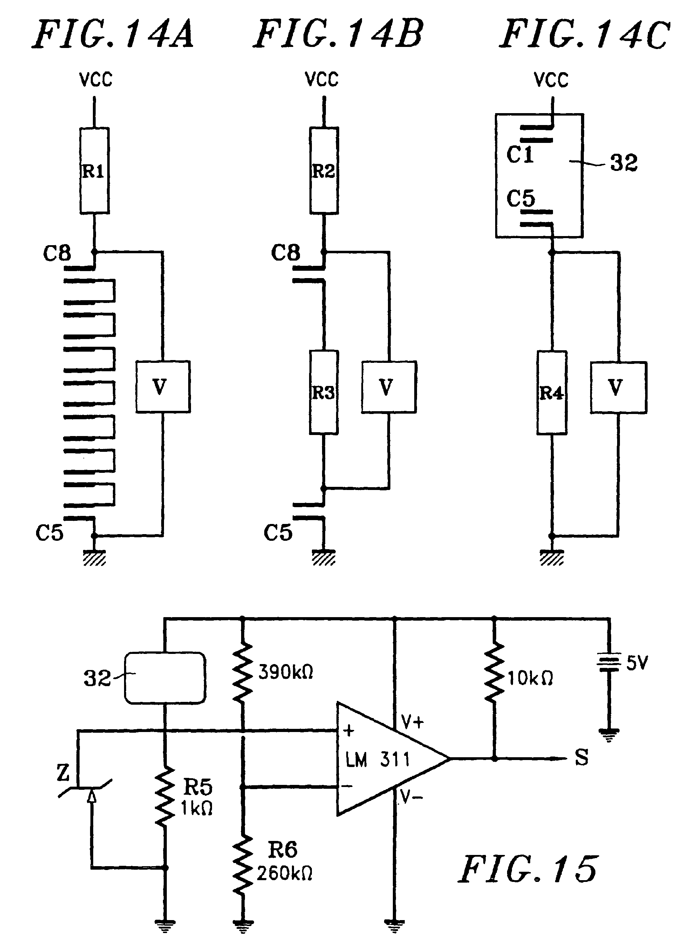

Pour faire cohabiter ces trois fonctions, surtout si on veut tester tous les contacts, la figure 14 donne les différentes fonctions à intégrer. Cette figure illustre un exemple de réalisation détaillée de mesure de résistance de contact (MRC) complète et de détection de fausses cartes (DFC), la carte étant référencée 32. Elle illustre les trois configurations de mesure : la configuration MRC/LEC (figure 14A), la configuration MRC/FRA (figure 14B) et la configuration DFC (figure 14C). Il y a aussi la configuration « normal ».

Un coupleur de l'art connu permet d'assurer le passage à ces quatre configurations par une commutation adéquate.

La figure 12 illustre un détecteur de fraude simplifié, qui comprend un détecteur de seuil haut 39 et un détecteur de seuil bas 40.

Cette réalisation a pour but de détecter les fraudes au masquage. Elle permet aussi de tester le contact de masse 41 d'une manière grossière (résistances de contact supérieures à 5 KΩ qui induisent des perturbations graves). On détecte la coupure du contact de masse dans le cas où un fraudeur introduit un objet isolant, et le court-circuit entre deux contacts si c'est un objet conducteur. Seul le contact de masse 41 est équipé d'un contact double et il n'y a plus de commutation. Au repos, quand la carte 42 est introduite, un courant de 0,1mA circule dans la résistance R et le contact de masse est établi. Vb=0V et Vh=5V.

Si on introduit un élément isolant entre la carte 42 et les balais du lecteur, la masse est isolée, il n'y a plus de courant dans la résistance R et Vb=5V et donc Sb=1.

Si on introduit un élément conducteur entre la carte 42 et les balais du lecteur, la résistance R est court-circuitée. Vh tombe à 0 V, Sh=1. De plus le coupleur détecte la tension coupleur. Il est possible de supprimer le détecteur de seuil haut en se fiant à cette tension.

On a par exemple
R = 50 KΩ, VCC=5 V

Les détecteurs peuvent être réglés par exemple : Sh=1 pour Vh<4 V et Sb=1 pour Vb>0,5V (Rc>5 KΩ) .

### • Contrôle de la consommation de la carte

La figure 15 illustre un exemple d'une réalisation de la détection de courant dans le cas de fausses cartes à mémoires à base de microcontrôleurs.

Les cartes à mémoires ne consomment pas plus de 1,5 mA en phase de repos alors qu'un microcontrôleur, de type PIC 16C71 par exemple, consomme à 20 Mhz un courant de l'ordre de 5 mA à 5 volts.

La tension à tester aux bornes de la résistance R5 est comparée à la tension de référence aux bornes de la résistance R6, #2volts. Le courant limite provoquant le basculement est fixé, par exemple, à 2 mA. Si la sortie passe à l'état haut on n'a pas affaire à une carte à mémoire, il faut donc rejeter la carte 32 qui a été lue.

### GLOSSAIRE

- DCE: Détecteur de Connexion Externe
- DFC: Détecteur de Fausses Cartes
- ISO: Organisation internationale pour la standardisation
- LEC: Contrôle de bonne lecture
- MRC: Mesure de Résistance de Contact
- MRC/FRA: Détection de fraudes par Mesure de Résistance de Contact
- MRC/LEC: Contrôle de bonne lecture par mesure de résistance de contact
- PIC: Type de microcontrôleurs utilisés dans les fausses cartes
- RUF: Réservé pour Utilisation Future
- TRI: Tri entre cartes synchrones et asynchrones
- VCC: Tension d'alimentation de la carte à mémoire

## Revendications

1. Procédé de contrôle d'un terminal muni d'un connecteur de carte à micromodules à contact comprenant des balais à contact aptes, chacun, à porter sur un contact de la carte, **caractérisé en ce que**, au moins un balai comportant deux lames de contact (12) aptes à porter sur le même contact (10) de la carte, lors de l'introduction de la carte dans le connecteur, on vérifie qu'au moins une résistance de contact mesurée entre les deux lames de contact d'un balai est bien inférieure à une première valeur déterminée, **en ce que**, en cours de communication entre la carte et le terminal, on vérifie qu'au moins une résistance de contact mesurée entre les deux lames de contact d'un balai est bien inférieure à une seconde valeur déterminée, et **en ce que** l'on vérifie que deux contacts de la carte, qui ne doivent jamais être reliés entre eux, ne sont pas en court-circuit.

2. Procédé selon la revendication 1, dans lequel on mesure la consommation du composant de la carte de manière à détecter la présence d'un microprocesseur en lieu et place de ladite carte.

3. Procédé selon la revendication 2, dans lequel le terminal recherche immédiatement la présence d'un microcontrôleurs puis examine la qualité des contacts avant de lire la zone d'identité pour amorcer le dialogue terminal/carte, puis, dès que le terminal passe en phase de numérotation, active la détection de fraude au masquage par mesure de résistance, le détecteur restant actif durant toute la communication.

4. Procédé selon la revendication 3, dans lequel le terminal examine la qualité des contacts, puis recherche la présence d'un microcontrôleur avant de lire la zone d'identité pour amorcer le dialogue terminal/carte, puis, en phase de numérotation, lance un cycle qui fait alterner la détection de fraude au masquage et la détection de connexion externe ou la détection de fausses cartes.

5. Procédé selon la revendication 1, dans lequel on utilise des balais à contact divisés, chacun, en deux lames de contact aptes à porter sur un contact unique de la carte, et en ce que l'on mesure la résistance entre ces deux lames de contact.

6. Procédé selon la revendication 5, dans lequel, pour effectuer la mesure des contacts, on met en série toutes les doubles lames de contacts et on mesure la résistance totale ainsi obtenue.

7. Procédé selon la revendication 1, dans lequel la première valeur déterminée est égale à 200 mΩ.

8. Procédé selon la revendication 1, dans lequel la seconde valeur déterminée est égale à 1 MΩ.

9. Procédé selon la revendication 1, dans lequel la seconde valeur déterminée est égale à 5 Ω.

10. Terminal muni d'un connecteur de carte à micromodules à contact comprenant des balais à contact aptes, chacun, à porter sur un contact de la carte, **caractérisé en ce qu'**il comprend :
- des moyens de vérification aptes à vérifier qu'au moins une résistance de contact mesurée entre les deux lames de contact d'un balai est bien inférieure à une première valeur déterminée,
- des moyens de vérification, aptes à vérifier, en cours de communication entre la carte et le terminal, qu'au moins une résistance de contact mesurée entre les deux lames de contact d'un balai est bien inférieure à une seconde valeur déterminée, et
- des moyens de vérification aptes à vérifier que deux contacts de la carte, qui ne doivent jamais être reliés entre eux, ne sont pas en court-circuit.

## Claims

1. Method for checking a terminal provided with a contact connector for cards with micromodules comprising contact brushes each able to bear on a contact of the card, **characterized in that**, at least one brush comprising two contact blades (12) able to bear on the same contact (10) of the card, during the insertion of the card into the connector, a check is made to verify that at least a contact resistance measured between the two contact blades of a brush is well below a first determined value, **in that**, in the course of communication between the card and the terminal, a check is made to verify that at least one contact resistance measured between the two contact blades of a brush is well below a second determined value, and **in that** a check is made to verify that two contacts of the card, which should never be linked together, are not short-circuited.

2. Method according to Claim 1, in which the consumption of the component of the card is measured in such a way as to detect the presence of a microprocessor instead of the said card.

3. Method according to Claim 2, in which the terminal searches immediately for the presence of a microcontroller then examines the quality of the contacts before reading the identity area so as to instigate the terminal/card dialogue, then, as soon as the terminal switches over to the dialling phase, activates the detection of masking fraud by resistance measurement, the detector remaining active throughout the communication.

4. Method according to Claim 3, in which the terminal examines the quality of the contacts, then searches for the presence of a microcontroller before reading the identity area so as to instigate the terminal/card dialogue, then, in the dialling phase, runs a cycle which alternates the detection of masking fraud and the detection of external connection or the detection of false cards.

5. Method according to Claim 1, in which use is made of contact brushes each divided into two contact blades able to bear on a single contact of the card, and in that the resistance between these two contact blades is measured.

6. Method according to Claim 5, in which, to perform the measurement of the contacts, all the double blades of contacts are placed in series and the total resistance thus obtained is measured.

7. Method according to Claim 1, in which the first determined value is equal to 200 mΩ.

8. Method according to Claim 1, in which the second determined value is equal to 1 MΩ.

9. Method according to Claim 1, in which the second determined value is equal to 5 Ω.

10. Terminal provided with a contact connector for cards with micromodules comprising contact brushes each able to bear on a contact of the card, **characterized in that** it comprises:
- means of verification able to verify that at least one contact resistance measured between the two contact blades of a brush is well below a first determined value,
- means of verification, able to verify, in the course of communication between the card and the terminal, that at least one contact resistance measured between the two contact blades of a brush is well below a second determined value, and
- means of verification able to verify that two contacts of the card, which should never be linked together, are not short-circuited.

## Patentansprüche

1. Verfahren zur Kontrolle eines Terminals, das mit einem Kartenverbinder mit Mikrokontaktmodulen versehen ist, der Kontaktbürsten aufweist, die je in der Lage sind, auf einem Kontakt der Karte aufzuliegen, **dadurch gekennzeichnet, dass** mindestens eine Bürste zwei Kontaktlamellen (12) aufweist, die auf dem gleichen Kontakt (10) der Karte aufliegen können, und beim Einführen der Karte in den Verbinder verifiziert wird, dass mindestens ein zwischen den beiden Kontaktlamellen einer Bürste gemessener Kontaktwiderstand deutlich niedriger ist als ein erster bestimmter Wert, dass während der Verbindung zwischen der Karte und dem Terminal verifiziert wird, dass mindestens ein zwischen den beiden Kontaktlamellen einer Bürste gemessener Kontaktwiderstand deutlich niedriger ist als ein zweiter bestimmter Wert, und dass verifiziert wird, dass zwei Kontakte der Karte, die niemals miteinander verbunden sein dürfen, nicht kurzgeschlossen sind.

2. Verfahren nach Anspruch 1, bei dem der Verbrauch der Komponente der Karte gemessen wird, um das Vorhandensein eines Mikroprozessors anstelle der Karte zu erfassen.

3. Verfahren nach Anspruch 2, bei dem das Terminal sofort nach dem Vorhandensein eines Mikrocontrollers sucht und dann die Qualität der Kontakte prüft, ehe es die Identitätszone liest, um den Dialog zwischen dem Terminal und der Karte zu starten, dann, sobald das Terminal in die Phase der Nummernwahl übergeht, die Erfassung eines Betrugs durch Maskieren durch Widerstandsmessung aktiviert, wobei der Detektor während der ganzen Verbindung aktiv bleibt.

4. Verfahren nach Anspruch 3, bei dem das Terminal die Qualität der Kontakte prüft und dann nach dem Vorhandensein eines Mikrocontrollers sucht, ehe es die Identitätszone liest, um den Dialog zwischen Terminal und Karte zu starten, dann in der Phase der Nummernwahl einen Zyklus startet, in dem die Erfassung eines Betrugs durch Maskieren und die Erfassung einer externen Verbindung oder die Erfassung von falschen Karten einander abwechseln.

5. Verfahren nach Anspruch 1, bei dem Kontaktbürsten verwendet werden, die je in zwei Kontaktlamellen aufgeteilt sind, die in der Lage sind auf einem einzigen Kontakt der Karte aufzuliegen, und dass der Widerstand zwischen diesen beiden Kontaktlamellen gemessen wird.

6. Verfahren nach Anspruch 5, bei dem zur Messung der Kontakte alle doppelten Kontaktlamellen in Reihe geschaltet werden und der so erhaltene Gesamtwiderstand gemessen wird.

7. Verfahren nach Anspruch 1, bei dem der erste bestimmte Wert gleich 200 mΩ ist.

8. Verfahren nach Anspruch 1, bei dem der zweite bestimmte Wert gleich 1 MΩ ist.

9. Verfahren nach Anspruch 1, bei dem der zweite bestimmte Wert gleich 5 Ω ist.

10. Terminal, das mit einem Kartenverbinder mit Mikrokontaktmodulen versehen ist, der Kontaktbürsten aufweist, die je in der Lage sind, auf einem Kontakt der Karte aufzuliegen, **dadurch gekennzeichnet, dass** es aufweist:
- Verifizierungsmittel, die in der Lage sind, zu verifizieren, dass mindestens ein Kontaktwiderstand, der zwischen den beiden Kontaktlamellen einer Bürste gemessen wird, deutlich unter einem ersten bestimmten Wert liegt,
- Verifizierungsmittel, die in der Lage sind, während der Verbindung zwischen der Karte und dem Terminal zu verifizieren, dass mindestens ein Kontaktwiderstand, der zwischen den beiden Kontaktlamellen einer Bürste gemessen wird, deutlich unter einem zweiten bestimmten Wert liegt, und
- Verifizierungsmittel, die in der Lage sind, zu verifizieren, dass zwei Kontakte der Karte, die niemals miteinander verbunden sein dürfen, nicht kurzgeschlossen sind.
